# EUROPÄISCHE PATENTSCHRIFT

(11) **EP 2 010 092 B1**
(45) Veröffentlichungstag und Bekanntmachung des Hinweises auf die Patenterteilung: **24.07.2013**
(21) Anmeldenummer: 07724416.8
(22) Anmeldetag: 20.04.2007
(51) Int. Cl.: A61C 8/00

(54) **DENTALIMPLANTAT UND VERFAHREN ZU SEINER MONTAGE**
DENTAL IMPLANT AND PROCESS FOR ITS ASSEMBLY
IMPLANT DENTAIRE ET PROCÉDÉ DE MONTAGE DE CELUI-CI

(30) Priorität: 20.04.2006 DE 102006018726
(43) Veröffentlichungstag der Anmeldung: 07.01.2009
(73) Patentinhaber: Zipprich, Holger, 64283 Darmstadt (DE)
(72) Erfinder: Zipprich, Holger, 64283 Darmstadt (DE)
(74) Vertreter: Tergau & Walkenhorst
(86) Internationale Anmeldenummer: PCT/EP2007/003480
(87) Internationale Veröffentlichungsnummer: WO 2007/121939

(56) Entgegenhaltungen:
- WO-A-99/52466
- WO-A1-97/14371
- US-A- 5 281 140
- US-A1- 2003 013 068

## Beschreibung

Die Erfindung betrifft ein Dentalimplantat mit einem in einen Kieferknochen einbringbaren Pfostenteil und mit einem diesem zugeordneten mehrstückigen Aufbauteil, an das ein Zahnersatzstück anbringbar ist. Sie bezieht sich weiter auf ein Verfahren zur montage eines derartigen Aufbauteils.

Ein gattungsgemäβes Implantat ist beispielsweise aus der WO-A-9952 466 bekannt.

Dentalimplantate sind in vielfältigen Formen bekannt. Sie werden meist durch Einschrauben an Stelle eines extrahierten oder ausgefallen Zahnes in den Kieferknochen eingesetzt, um dort nach einer Einheilphase von drei bis vier Monaten ein als Zahnersatz dienendes prothetisches Aufbauteil oder eine Krone zu halten. Dazu ist ein derartiges Zahnimplantat üblicherweise als geeignet geformter Metallkörper ausgebildet und in der Art eines Stiftes geformt und weist am apikalen Ende ein zumeist selbstschneidendes Schraubengewinde auf, mit welchem der Stift in das entsprechend präparierte Implantatbett eingesetzt wird.

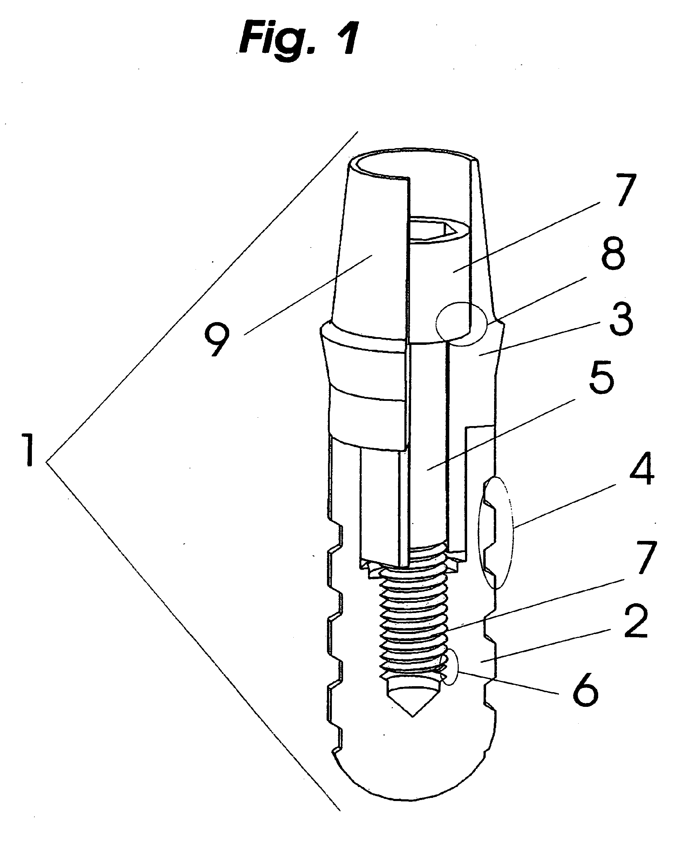

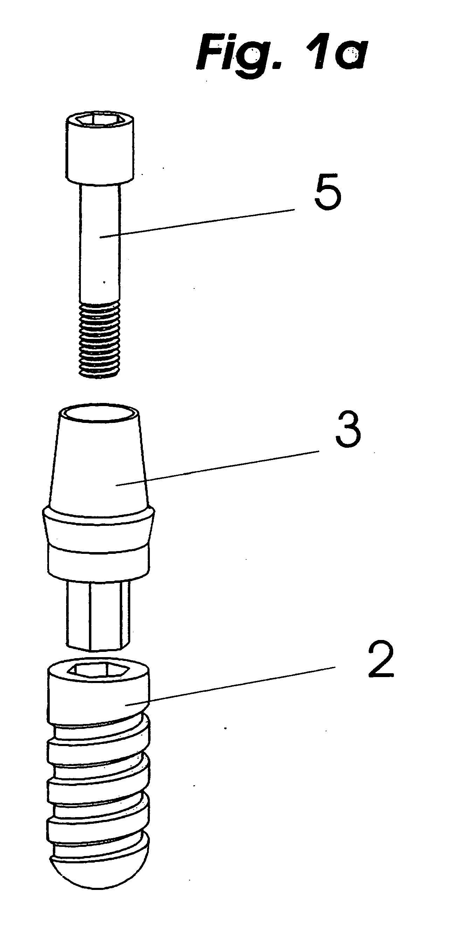

Ein Beispiel für ein Dentalimplantat der oben genannten Art ist in Fig. 1 in einer teilweisen Ansicht und teilweise in einem axialen Schnitt gezeigt. Das zweiteilige Dentalimplantat 1 umfasst ein Pfostenteil 2 und ein Aufbauteil 3. Das Pfostenteil 2 und ebenso das Kopf- oder Aufbauteil 3 bestehen aus Metall oder einer Keramik, und zwar insbesondere aus Titan, einer Titanlegierung, einer titanhaltigen Legierung, einer Zirkonoxid-, Aluminiumoxidkeramik oder einer Keramik, die entweder Zirkonoxid oder Aluminiumoxid beinhaltet. Das Pfostenteil 2 ist von außen mit einem Gewinde 4 versehen, welches als selbst schneidendes oder als nicht selbst schneidendes Gewinde ausgeführt sein kann. Die Steigung des Gewindes kann gleichmäßig oder veränderlich ausgeführt sein. Die äußere Gestalt des Pfostenteils 2 kann auch ohne Gewinde mit und ohne mechanische Retentionshilfen ausgeführt sein. Über eine Verbindungsschraube 5 werden das Pfostenteil 2 und das Aufbauteil 3 miteinander verschraubt. Das Gewinde der Verbindungsschraube 5 wird in das Innengewinde 6 des Pfostenteils 2 eingeschraubt. Der Schraubenkopf 7 der Verbindungsschraube 5 presst beim Einschrauben der Verbindungsschraube 5 über die Stirnsenkung 8 des Aufbauteils 3 das Aufbauteil 3 auf das Pfostenteil 2.

Das Pfostenteil 2 wird in einem entsprechend aufbereiteten Implantatbett des Kieferknochens verankert. Die Gewindekonstruktion gewährleistet dabei eine hohe Primärstabilität und eine gleichmäßige Weiterleitung der bei Kaubelastung auftretenden Kräfte in den Kieferknochen. Das Aufbauteil 3 wird am oberen Bereich 9 mit einer Krone, einer anderen prothetischen Versorgung oder dergleichen in bekannter Weise verbunden. Diese Verbindung kann als Verschraubung, Klemmung, konische Selbsthemmung, Unterdruck, Magnet, Kugelkopfsystem, Zementierung, Verklebung oder dergleichen ausgeführt sein.

Um einer Rotation oder Verdrehung zwischen dem Aufbauteil 3 und dem Pfostenteil 2 durch äußere Kräfte (meist bedingt durch die Kaubelastung) entgegen zu wirken, wird entweder eine mechanische Indizierung in Form einer mechanischen Sperre verwendet oder die Flächenpressung zwischen Aufbauteil 3 und dem Pfostenteil 2 geeignet gewählt. Fig. 1a zeigt eine Explosionszeichnung der drei Elemente Pfostenteil 2, Aufbauteil 3 und Verbindungsschraube 5 des Dentalimplantats aus Fig. 1.

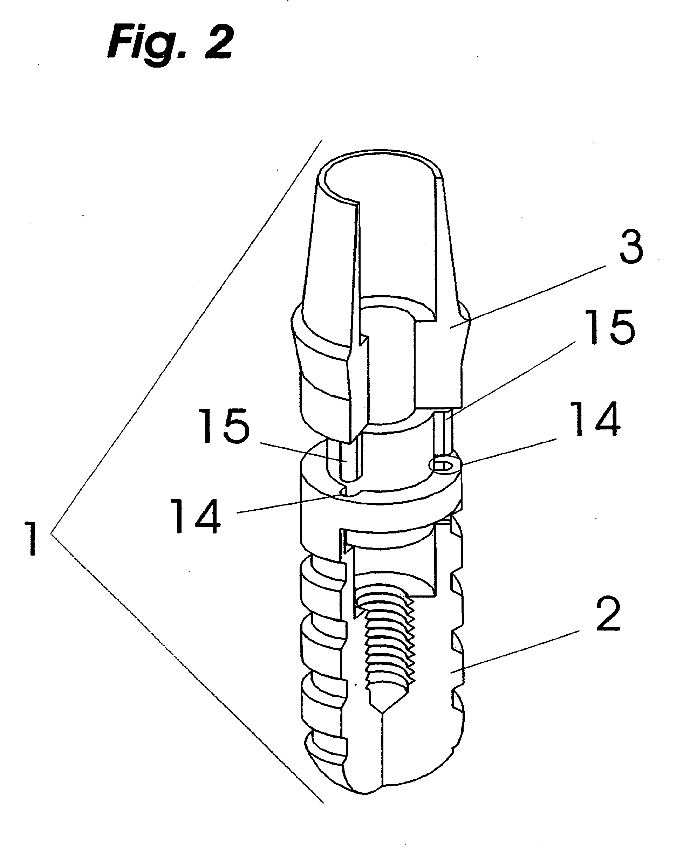

Die zur Indizierung und zur Vermeidung der Rotation des Aufbauteils 3 auf dem Pfostenteil 2 verwendete mechanische Sperre kann in verschiedenen Varianten ausgeführt sein. Fig. 2 zeigt als Beispiel einen Innensechskant im Pfostenteil 2 und einen Außensechskant am Aufbauteil 3. Die Ausführung als Außen- und Innensechskant kann auch anders herum erfolgen. Die Anzahl der Kanten eines solchen Kantensystems kann variieren. Weiterhin können die Ecken solcher Kantsysteme mit einem Radius versehen sein. Als weitere Ausführungen sind Torx und Vielzahnsysteme mit variierender Elementanzahl, variierender Geometrie bekannt. Darüber hinaus sind in Fig. 2 Indizierungen mittels Einfräsungen 14 im Pfostenteil 2 und herausragender Elemente 15 am Aufbauteil 3 bekannt.

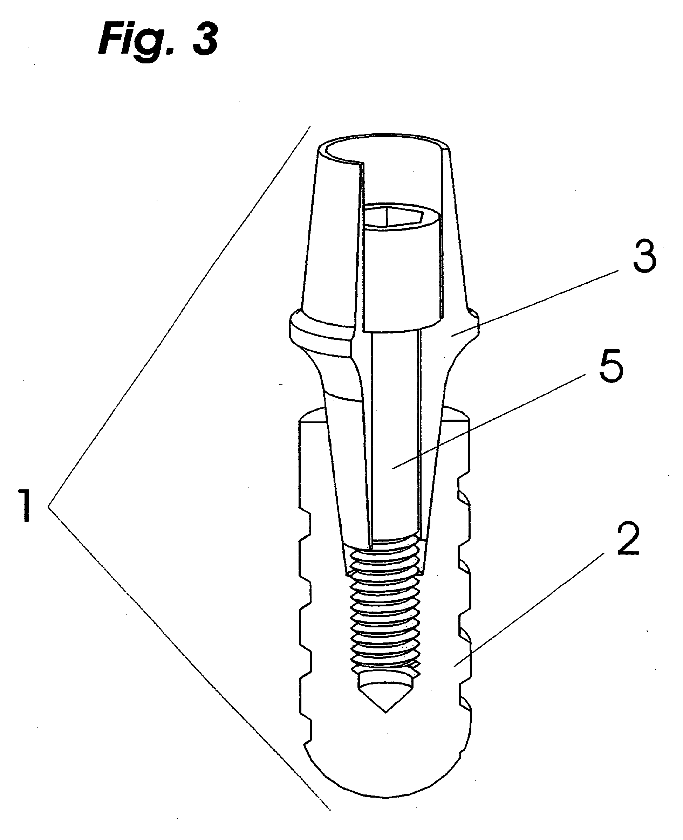

Dabei erfolgt die Vermeidung der Rotation zwischen dem Pfostenteil 2 und dem Aufbauteil 3 über die Anpresskraft der Verbindungsschraube. Zusätzlich oder alternativ kann die Verbindung zwischen dem Pfostenteil 2 und dem Aufbauteil 3 meist konisch ausgeführt sein. Insbesondere handelt es sich dabei um Ausführungen der in Fig. 3 dargestellten Art, die auf Grund des Konuswinkels und der Oberflächenreibung zwischen den konischen Kontaktflächen des Pfostenteils 2 und des Aufbauteils 3 beim Anziehen der Verbindungsschraube 5, über die konischen Kontaktstellen zwischen dem Pfostenteil 2 und dem Aufbauteil 3 als konische Hemmung bzw. konische Selbsthemmung ausgeführt sind.

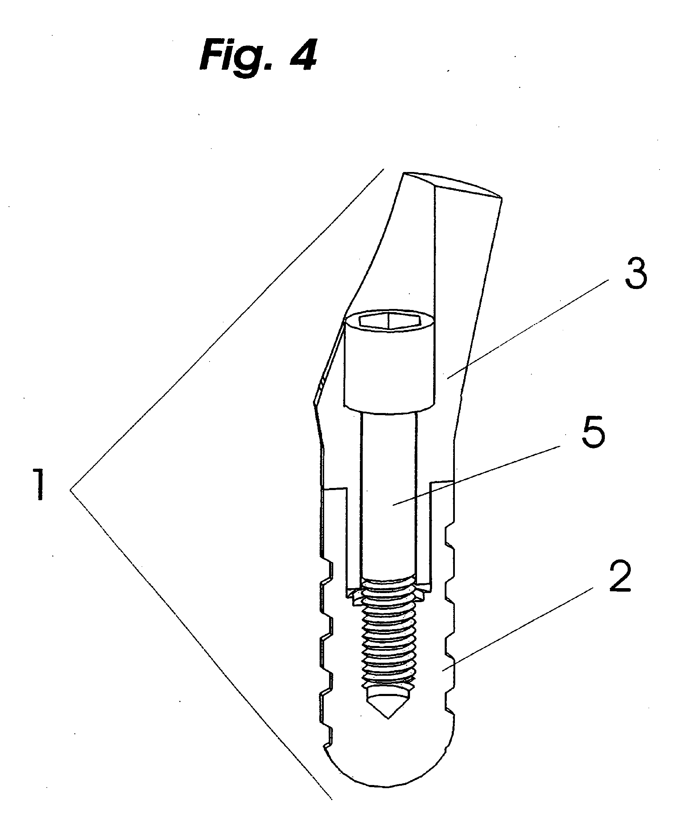

Abhängig von der Insertionsstelle (Frontzahn-, Seitenzahnbereich, Unterkiefer, Oberkiefer), der Knochensubstanz, der Restbezahnung, Verlauf und Position der Gefäße und Nerven ist es dem Behandler nicht immer möglich, die Bohrung für das Pfostenteil/Implantat übereinstimmend mit der Achse der prothetischen Versorgung (Krone oder dergleichen) zu bohren. Daraus folgt, dass ein gerade ausgeführtes Pfostenteil/Implantat und ein gerade ausgeführtes Aufbauteil nicht den anatomischen Gegebenheiten des Patienten genügen. Um diesem Problem entgegen zu wirken, werden abgewinkelte Aufbauteile verwendet (Fig. 4). Man bezeichnet abgewinkelte Aufbauteile auch als angulierte Aufbauteile. Fig. 4 zeigt ein Dentalimplantat 1 mit einem Pfostenteil 2, einem abgewinkelten/angulierten Aufbauteil 3, wobei das Pfostenteil 2 und das angulierte Aufbauteil 3 über die Verbindungsschraube 5 miteinander verschraubt sind.

Üblicherweise liegt dieser Winkel zwischen 10° und 30°. Nach der Insertion, vorzugsweise nach der Einheilung der Pfostenteile, müssen zur Anfertigung der Krone, Brücke oder dergleichen die räumlichen und geometrischen Informationen der Restbezahnung (z. B. Antagonisten, mesial und distal der Insertionsstelle stehenden Zähne), der Schleimhaut und des Pfostenteils/Implantats oder des montierten Aufbauteils erfasst werden. Diese räumlichen und geometrischen Informationen sind notwendig, um die Krone, Brücke oder dergleichen passgenau und anatomisch optimiert zu fertigen. Zu diesem Zweck wird eine Abformung, vorzugsweise aus Silikon oder einer anderen dentalen Abformmaterial, von der Mundsituation angefertigt. Diese Abformung wird vorzugsweise mit Gips oder einem anderen dentalen Modellwerkstoff ausgegossen. Dieses Gipsmodell ist ein Duplikat der Mundsituation des Patienten / der Patientin. Es liefert dem Zahnarzt und oder dem Zahntechniker die Informationen über die Position der Restbezahnung, der Schleimhaut und der inserierten Pfostenteile/Implantate.

Zur Verbesserung der Übertragung von Position und Geometrie der inserierten Pfostenteile/Implantate werden vorzugsweise spezielle Abformpfosten aus Metall und oder Kunststoff auf die inserierten Pfostenteile/Implantate gesteckt und/oder geschraubt. Anschließend wird die Abformung im Mund vorzugsweise mit Silikon angefertigt. Nach der Aushärtung des Abformmaterials verbleiben der Abformpfosten bei der Andruckentnahme entweder auf dem Implantat oder werden mit der Abformung entnommen. Beim Ausgießen der Abformung muss der Abformpfosten/Aufbaupfosten in der Abformung platziert werden und mit einem Laborimplantat verbunden sein. Dieses Laborimplantat besitzt bezüglich der Verbindung und geometrisch in Richtung des Abformpfostens / Aufbaupfostens gleiche oder ähnliche geometrische Gestalt wie das inserierte Pfostenteil/Implantat. Nach dem Ausgießen der Abformung mit integriertem Abformpfosten/Aufbaupfosten und integriertem Laborimplantat erhält man ein Gipsmodell mit eingegossenem Laborimplantat.

Besitzt das verwendete Implantatsystem eine Indizierung, wurde diese vom Patientenmund auf das Gipsmodell übertragen. Basierend auf diesem Gipsmodell wird die prothetische Versorgung des Implantats / der Implantate geplant und gefertigt. Hierbei nimmt die rotatorische Position des Aufbauteils auf dem Implantat eine entscheidende Rolle ein. Besitzt das verwendete Implantatsystem eine Indizierung, so sind die Positioniermöglichkeiten des Aufbauteils auf dem Laborimplantat begrenzt. Bei einer Sechskantverbindung sind es sechs Positioniermöglichkeiten. Bei einem Implantatsystem ohne Indizierung können alle Positionen zwischen 0° und 360° verwendet werden. Nach der Fertigung erfolgt meistens eine Anprobe im Patientenmund. Bei dieser Anprobe oder der endgültigen Eingliederung des prothetischen Zahnersatzes muss der Behandler das Aufbauteil / die Aufbauteile und alle weiteren prothetischen Elemente im Patientenmund in der gleichen Position wie auf dem Gipsmodell eingliedern.

Ist das inserierte Implantatsystem mit einer Indizierung ausgestattet, hat der Behandler eine begrenzte Anzahl an Wahlmöglichkeiten, um die gewünschte Position zu ermitteln. Existiert bei dem verwendeten Implantatsystem keine Indizierung, kann der Behandler nicht den Vorteil einer begrenzten Positionierung zur Ermittlung der gewünschten Position nutzen. Der Behandler muss die Information/-en über die gewünschte/-n rotatorische/-n Position/-en des/der Aufbauteils/-teile auf dem/den Implantat/-en auf einem anderen Weg ermitteln. Hierfür werden meist individuelle Schlüssel vom Zahntechniker angefertigt. Der individuelle Schlüssel wird auf die Aufbauteile / das Aufbauteil montiert und als gesamtes mit zur Hilfenahme der benachbarten Zähne und oder der benachbarten anatomischen Struktur auf die Implantate aufgesetzt. Nach dem Befestigen der Aufbauteile auf den Implantaten (schrauben, zementieren, etc.) kann der individuelle Schlüssel entfernt werden und die restliche Eingliederung der prothetischen Komponenten erfolgen. Schlussfolgernd lässt sich sagen, dass es zur optimierten Fertigung der prothetischen Komponenten vorteilhaft ist, wenn der Zahntechniker nicht durch eine Indizierung in der Verbindung des Aufbauteils und des Implantates in der Wahl der rotatorischen Positionierung eingeschränkt ist. Muss aber ein individueller Schlüssel angefertigt werden, ist dies für den Zahntechniker mit Aufwand und Kosten verbunden. Weiterhin ist es für den Behandler beim Eingliedern mit einem höheren Aufwand verbunden. Für den Zahnarzt ist es günstiger, wenn die Anzahl der Positioniermöglichkeiten des Aufbauteils auf dem Implantat so niedrig wie möglich ist. Angenehm sind 8-12 Möglichkeiten, vorteilhaft 3-5 Möglichkeiten insbesondere aber 1-2 Positioniermöglichkeiten.

D.h. im Optimum kann der Zahntechniker eine rotatorische Bewegungsfreiheit des / der angulierten oder nicht angulierten Aufbauteils /-teile von 360° stufenlos nutzen, aber der Zahnarzt hat ohne Hilfsmittel für das Eingliedern des einteiligen oder mehrgeteilten Aufbauteils nur eine Positioniermöglichkeit auf dem Pfostenteil im Patientenmund.

Der Erfindung liegt daher die Aufgabe zugrunde, ein Dentalimplantat der oben genannten Art anzugeben, welches es dem Zahntechniker erlaubt, alle Positionen zwischen 0° und 360° zu verwenden, und es dem Behandler gleichzeitig ermöglicht, ohne Verwendung von Hilfswerkzeugen (z.B. individueller Schlüssel) die oben beschriebenen Vorteile einer Indizierung wahrzunehmen. Des weiteren soll ein zur Herstellung des Dentalimplantats besonders geeignetes Verfahren angegeben werden.

Bezüglich des Dentalimplantates wird diese Aufgabe erfindungsgemäß gelöst mit den Merkmalen des Anspruchs 1. Dabei ist vorgesehen, dass das Dentalimplantat ein zumindest zweiteilig ausgeführtes Aufbauteil aufweist, das das in den Kieferknochen implantierte Pfostenteil mit dem Zahnersatzteil verbindet. Durch den zweiteiligen Aufbau des Aufbauteils kann dabei die Feinjustierung der rotatorischen Orientierung durch geeignete Ausrichtung der Aufbauteilstücke relativ zueinander erfolgen, wobei die endgültige Einbringung in den Mundbereich durch Fixierung am bereits implantierten Pfostenteil ohne rotatorische Freiheitsgrade und somit orientierungstreu erfolgen kann.

Dazu wird ein an das erste Aufbauteilstück angeformter zweiter Kontaktstift zunächst in eine zugeordnete Formausnehmung im zweiten Aufbauteilstück eingebracht, wobei durch geeignete Ausrichtung dieser Komponenten zueinander die erforderliche Orientierung eingestellt werden kann. Anschließend wird das zweite mit dem ersten Aufbauteilstück fixiert, so dass die bereits eingestellte Orientierung auch für die weiteren Bearbeitungsschritte erhalten bleibt. Anchließend wird in einem späteren Arbeitsschritt, insbesondere vom Zahnarzt, das gesamte Aufbauteil mit dem bereits in den Kieferknochen implantierten Pfostenteil verbunden, wobei ein an das erste Aufbauteilstück angeformter erster Kontaktstift formschlüssig in eine zugeordnete Formausnehmung im Pfostenteil eingebracht wird. Die Formausnehmung im Pfostenteil ist dabei vorzugsweise derart ausgeführt, dass in der Art einer Arretierung eine vorgegebene Orientierung des Aufbauteils erhalten bleibt.

Zur bedarfsweisen Einstellung des rotatorischen Freiheitsgrade oder der relativen Orientierung zwischen dem ersten und dem zweiten Aufbauteil sind die Querschnitte der für diese Verbindung vorgesehenen Elemente, also des zweiten Kontaktstiftes und der zugeordneten Formausnehmung, dabei derart gewählt, dass eine freie Verdrehung des in die Formausnehmung eingebrachten Kontaktstiftes zumindest über einen gewissen Verdrehwinkel hinweg ermöglicht ist. Gemäβ einer nicht - erfindungsgemäβen Ausführung kann die Zusammenwirkung dieser Komponenten aber auch derart ausgestaltet sein, dass der zweite Kontaktstift vor Einbringung in die Formausnehmung geeignet ausgerichtet wird und bei der Einbringung die Formausnehmung seinerseits weiter ausformt und dabei die Orientierung bereits fixiert. Dazu kann der zweite Kontaktstift mit geeigneten Elementen wie beispielsweise Schneidkanten oder dergleichen versehen sein, die ihn in der gewählten Orientierung in der Formausnehmung fixieren.

Bezüglich des Verfahrens wird die genannte Aufgabe mit den Merkmalen des Anspruchs 9 gelöst. Vorteilhafte Ausgestaltungen der Erfindung sind Gegenstand der Unteransprüche.

Durch die mehrteilige Ausführung des Aufbauteils ist eine Entkopplung einer frei wählbaren Rotation hinsichtlich der endgültigen Ausrichtung der Längsrichtung des für die Montage der Krone oder des Zahnersatzes vorgesehenen Montagebereichs des Aufbauteils durch den Zahntechniker einerseits von einer Richtungsvorgabe des einmal vorgefertigten Zwischenprodukts für die endgültige Anbringung des Aufbauteils am bereits im Patientenmund implantierten Pfostenteils durch den Zahnarzt andererseits ermöglicht. Unter voller Ausnutzung der dadurch gegebenen Rotationsfreiheit zwischen den beiden Aufbauteilstücken kann der Zahntechniker somit nach für ihn optimierten Verhältnissen eine Ausrichtung der Komponenten vornehmen. Anschließend werden die Aufbauteilstücke zueinander fixiert, so dass die vom Zahntechniker vorgenommene Ausrichtung erhalten bleibt. Bei der endgültigen Anbringung am Pfostenteil im Patientenmund, die aufgrund der formschlüssigen Anpassung des dort vorgesehenen Kontaktstifts an die zugeordnete Formausnehmung nur in einer vorgegebenen Orientierung möglich ist, kann der Zahnarzt sodann ohne nennenswerten Justierungsaufwand das fertige Dentalimplantat mit der vorgesehenen Ausrichtung herstellen.

Die Gestaltung der Aufbauteilstücke soll es dem Zahntechniker / Zahnarzt dabei insbesondere ermöglichen, bei der rotatorischen Positionierung des oder der Aufbauteile auf dem Implantat möglichst viele Positionen (möglichst mehr als 8 vorzugsweise mehr als 12), vorteilhafterweise alle Positionen zwischen 0° und 360° zu wählen. Gleichzeitig soll es dem Zahnarzt beim Eingliedern des aus den Aufbauteilstücken zusammengesetzten Aufbauteils möglich sein, ohne Hilfswerkzeuge die vom Zahntechniker vordefinierte Position des oder der Aufbauteile ohne Schwierigkeiten zu erkennen. Dies wird über das mehrgeteilte, vorzugsweise zweigeteilte Aufbauteil ermöglicht. Wichtig sind bei der Gestaltung des mehrgeteilten Aufbauteils folgende Parameter. Das basale (pfostenteilseitige) Primäraufbauteil besitzt eine Indizierung in Form eines Gesperres und oder eines Gehemmes in Richtung dersn Pfostenteils. Die interne Verbindung des mehrgeteilten Aufbauteils, also die Verbindung zwischen dem Primäraufbauteil und dem Sekundäraufbauteil ermöglicht eine rotatorische Bewegungsfreiheit. Hierbei kann bei der Auswahl der optimalen rotatorischen Position des Sekundäraufbauteils auf dem Primäraufbauteil das Sekundäraufbauteil bereits den gewünschten Abstand zum Primäraufbauteil besitzen oder einen größeren Abstand zu dem Primäraufbauteil haben.

Die rotatorische Bewegungsfreiheit des Sekundäraufbauteils auf dem Primäraufbauteil ist im Optimum nicht begrenzt. Für den Zahntechniker wäre es aber schon sehr hilfreich, wenn er mehr als 8 vorzugsweise mehr als 12 und insbesondere mehr als 16 Positionen des Sekundäraufbauteils auf dem Primäraufbauteil wählen kann.

Der funktionelle Ablauf bei der Einbringung des Zahnersatzes gliedert sich wie folgt:
Die Schritte nach der Insertion des Pfostenteils bis zur Modellherstellung vorzugsweise aus Gips bleiben wie oben beschrieben. Nun kann der Zahntechniker / Zahnarzt sich eine für die prothetische Gestaltung optimale rotatorische Position des Sekundäraufbauteils auf dem Primäraufbauteil wählen. Hat der Zahntechniker / Zahnarzt die optimale Position des Sekundäraufbauteils auf dem Primäraufbauteil gefunden, so kann er diese Position fixieren. Das bedeutet, dass nach dem Fixieren der Einzelelemente des mehrgeteilten Aufbauteils die restlichen prothetischen Komponenten gefertigt werden können, ohne dass sich eines der Elemente des mehrgeteilten Aufbauteils rotatorisch und oder translatorisch zu einem der anderen Elemente des mehrgeteilten Aufbauteils verschiebt. Folglich verhindert und/oder behindert die Fixierung die rotatorische und oder die translatorische Bewegungsfreiheit der einzelnen Elemente des mehrgeteilten Aufbauteils untereinander. Nach der Herstellung der prothetischen Komponenten erhält der Behandler das mehrgeteilte und
intern fixierte Aufbauteil und die restlichen prothetischen Komponenten. Im Patientenmund kann der Behandler auf die Indizierung zwischen dem Pfostenteil und dem mehrgeteilten Aufbauteil zurückgreifen.

Es fällt dem Behandler mit der Indizierung leicht, die gewünschte rotatorische Position des mehrgeteilten Aufbauteils zu ermitteln und das mehrgeteilte Aufbauteil als ganzes einzugliedern. Dies kann mittels einer Verbindungsschraube, einer Hemmung (vorzugsweise einer konischen Selbsthemmung), eines Gesperres, einer Rastung, einer Zementierung oder einer Verklebung erfolgen. Besonders vorteilhaft erweist sich, alle Elemente des mehrgeteilten Aufbauteils und das Pfostenteil mit einer gemeinsamen Verbindungsschraube zur montieren. D.h. dass die Verbindungsschraube das okklusal liegende Element des mehrgeteilten Aufbauteils über den Schraubenkopf oder ein Gewinde und über ein Gewinde im Pfostenteil mit dem Pfostenteil verspannt wird. Somit werden die restlichen Elemente des mehrgeteilten Aufbauteils zwischen dem okklusalen Element des mehrgeteilten Aufbauteils und dem Pfostenteil verspannt.

Die Fixierung zwischen Primäraufbauteil und dem Sekundäraufbauteil kann mit unterschiedlichen Geometrien und/oder unterschiedlichen Mechanismen und/oder Verfahren erfolgen. Im Folgenden sind verschiedene Möglichkeiten der internen Fixierung zwischen dem Primäraufbauteil und dem Sekundäraufbauteil aufgezeigt.
1. Die interne Fixierung basiert auf einer rotatorischen und/der translatorischen Hemmung. Das bedeutet dass das Primäraufbauteil und das Sekundäraufbauteil nach der Positionierung mechanisch gegeneinander verspannt werden und auf Grund der Oberflächenreibung untereinander nur mit größerem Kraft- und/oder Momentaufwand untereinander gelöst werden können. Dies kann durch verschiedene Effekte oder Verfahren erreicht werden.
   a. Die interne Verbindung des mehrgeteilten Aufbauteils ist in Form einer konischen Verbindung gestaltet. Beim Fixieren der Elemente des mehrgeteilten Aufbauteils werden die einzelnen Elemente so stark aufeinander gepresst, dass es zu einer Selbsthemmung zwischen den Elementen kommt. D.h. dass nach Rücknahme der Anpresskraft die einzelnen Elemente nur mit einem erhöhten Kraft- und oder Momentaufwand wieder voneinander getrennt oder ihre relative Position zueinander verändert werden kann. Das Aufbringen der Anpresskraft kann mit einer Verbindungsschraube, der Körperkraft des Zahntechnikers / Zahnarztes oder mit einem Hilfsgerät erfolgen.
   b. Gemäβ einem nicht - erfindungsgemäβen Beispiel ist die interne Verbindung des mehrgeteilten Aufbauteils in Form einer parallelwandigen Verbindung gestaltet. Diese parallelwandige Verbindung kann unterschiedliche Geometrien annehmen. Hier hat sich eine runde Form als vorteilhaft erwiesen. Die Maße der internen Verbindung sind als Presspassung ausgelegt, so dass nach dem Fügen der einzelnen Elemente diese nur mit einem erhöhten Kraft- und oder Momentaufwand wieder getrennt oder ihre relative Position zueinander verändert werden kann. Um die rotatorische Positionierung zu vereinfachen kann das Element, welches als Matrize ausgeführt ist, vor der Positionierung erwärmt werden und/oder das Element, welches als Patrize ausgeführt ist, abgekühlt werden, um durch eine thermische Expansion und/oder Kontraktion eine leichtere Positionierung zu ermöglichen. D.h. die Matrize wird auf die Patrize aufgeschrumpft. Weiterhin kann die rotatorische Position vor, nach oder gleichzeitig mit der translatorischen Fügebewegung erfolgen. Darüber hinaus kann sowohl die rotatorische Positionierung als auch die translatorische Fügebewegung mit einem Hilfsmittel durchgeführt werden.
2. Die interne Fixierung basiert auf einem rotatorischen und/oder translatorischen Gesperre, d.h. auf einer Indizierung, welche mehr als 8, vorzugsweise mehr als 12 und insbesondere mehr als 16 Positionierungsmöglichkeiten erlaubt und oder ein rotatorisches Spiel von mehr als 3°, vorzugsweise mehr als 6° und insbesondere mehr als 10° besitzt.
3. Gemäβ einem nicht - erfindungsgemäβen Beispiel fasiert die interne Fixierung auf einem nachträglich eingebrachten rotatorischen und/oder translatorischen Gesperre, d.h. auf dem nachträglichen Einbringen einer Indizierung. Für das Einbringen des Gesperres sind verschiedene Variationen und oder Verfahren möglich.
   a. Das Primäraufbauteil und das Sekundäraufbauteil sind nicht ohne größeren Kraft- und oder Momentaufwand fügbar. Eines oder mehrere der Elemente des mehrgeteilten Aufbauteils sind mit einem oder mehreren geometrischen Elementen ausgestattet, welche so gestaltet sind, dass sie beim gegenseitigen Fügen durch Abheben eines oder mehrerer Späne von einem oder mehreren Elementen des mehrgeteilten Aufbauteils eine Indizierung in Form eines rotatorischen und/oder translatorischen Gesperres produzieren / hervorrufen. Beim Fügen kann zusätzlich eine rotatorische und oder translatorische Hemmung entstehen.
   b. Das Primäraufbauteil und das Sekundäraufbauteil sind nicht ohne größeren Kraft- und oder Momentaufwand fügbar. Eines oder mehrere der Elemente des mehrgeteilten Aufbauteils sind mit einem oder mehreren geometrischen Elementen ausgestattet, welches so gestaltet sind, dass sie beim gegenseitigen Fügen durch eine plastische Verformung eines oder mehrerer Elemente des mehrgeteilten Aufbauteils eine Indizierung in Form eines rotatorischen und oder translatorischen Gesperres formen. Beim Fügen kann zusätzlich eine rotatorische und oder translatorische Hemmung entstehen.
   c. Bei den Varianten 3 a. und 3 b. kann eines der Elemente des mehrgeteilten Aufbauteils durch ein gleich oder ähnlich gestaltetes, speziell für den spanabhebenden oder formenden Prozess konzipiertes Hilfsteil verwendet werden.
   d. Bei den Varianten 3 a. und 3 b. können die spanabhebende oder geformte Indizierung eins oder mehrere Elemente des mehrgeteilten Aufbauteils in einem speziell dafür konzipierten Hilfsgerät durchgeführt werden.
4. Die interne Fixierung basiert auf einer Verschraubung. Die Schraube kann als gewöhnliche Schraube, als Schraube mir einer Zentralbohrung und oder als Schraube mir unterschiedlichen Steigungen ausgeführt sein.
5. Die interne Fixierung ist so gestaltet, dass das mehrgeteilte Aufbauteil vor der Fixierung nur eine rotatorische Beweglichkeit besitzt. Die translatorische Beweglichkeit ist konstruktionsbedingt gesperrt. Dies kann über schon vor der Werksauslieferung oder erst kurz vor dem Fixierungsvorgang erfolgen. D.h. die Aufbauteilstücke können in einem ersten Schritt für translatorische Beweglichkeiten gegeneinander gesperrt und/oder gehemmt werden, bevor sie beim Fixieren rotatorisch gegeneinander gesperrt und/oder gehemmt werden. Dies kann durch formende, abtragende und/oder auftragende Verfahren mit und/oder ohne Hilfselemente erfolgen.
6. Die interne Fixierung basiert auf einer Verschweißung.
7. Die interne Fixierung basiert auf einer Verlötung.
8. Die interne Fixierung basiert auf einer Verklebung.
9. Die interne Fixierung basiert auf einer Zementierung.

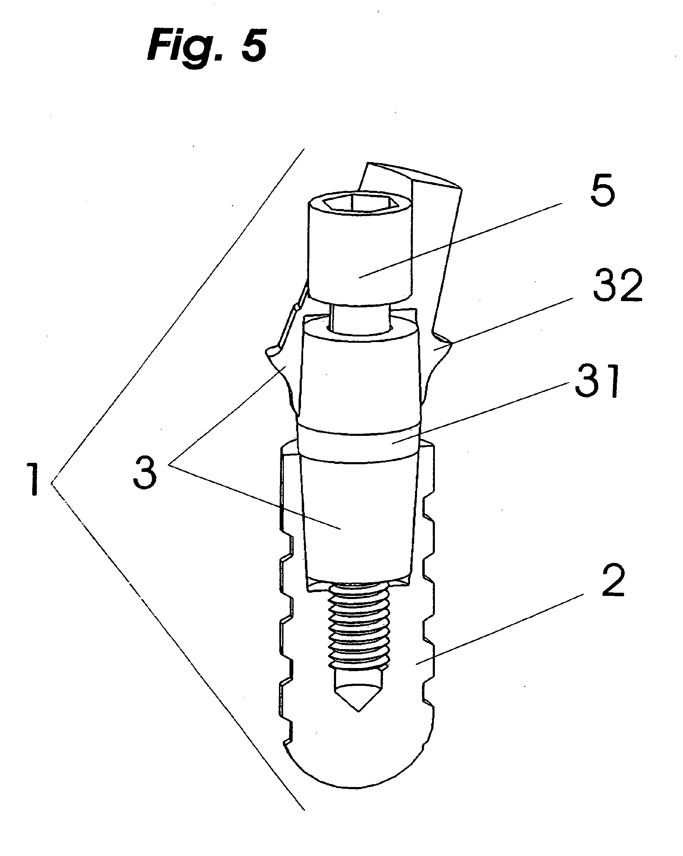

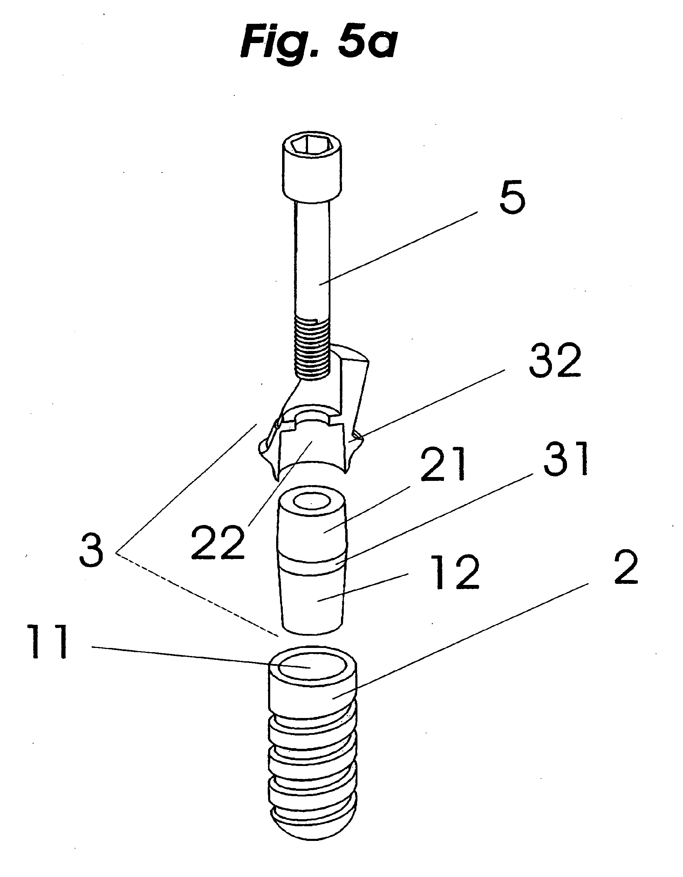

Weiterhin sind alle erdenklichen Kombinationen der Fixierungen 1-8 möglich. Folglich besteht ein nach der Erfindung gestaltetes Dentalimplantat ohne die Krone oder ähnlichen prothetischen Zahnersatz aus mindestens drei Teilen zuzüglich, wenn erforderlich, einer Verbindungsschraube. Ist keine Verbindungsschraube vorhanden, handelt es sich um eine hemmende, sperrende, geklebte, zementierte, verschweißte, verlötete Wirkung, mit welcher die einzelnen Elemente des Dentalimplantats miteinander verbunden sind. Die Verbindungsschraube kann die Gestalt wie in Fig. 5 - Fig. 6a annehmen. Weitere Variationen sind wie folgt beschrieben:
i. Die Führungsbohrung des mehrgeteilten Aufbauteils ist in der Dimension so gestaltet, dass der Schraubenschaft ein Spiel in der Bohrung aufweist. Das Schraubengewinde ist im Durchmesser größer als die Bohrung im mehrgeteilten Aufbauteil gestaltet. Dies kann durch verschiedene Verfahren erreicht werden. Z.B. kann eine Gewindehülse nach dem Durchschieben des Schraubenschafts angebracht weden. Die Gewindehülse kann verschraubt, verschweißt, verlötet, verklebt, vernietet und/oder verklemmt werden.
ii. In die Führungsbohrung des mehrgeteilten Aufbauteils ist in seiner Dimension das gleiche oder ein ähnliches Gewinde geschnitten und/oder geformt wie bei der Schraube und/oder dem Pfostenteil. Der Schraubenschaft der Verbindungsschraube ist im Durchmesser so reduziert, dass er gleich oder kleiner ist als der Gewindekern der Führungsbohrung des mehrgeteilten Aufbauteils.

Ein Ausführungsbeispiel der Erfindung wird anhand der Figur 5 näher erläutert. Fig. 5 zeigt die unten folgende mit Variante 1 beschriebene Gestaltung eines Dentalimplantats nach der hier vorliegenden Erfindung. In Fig. 5 ist ein Dentalimplantat 1 bestehend aus einem Pfostenteil 2, einem zweigeteilten Aufbauteil 3 und einer Verbindungsschraube 5 zu sehen. Das zweigeteilte Aufbauteil 3 ist in das implantatseitige/pfostenteilseitige/erste/untere Aufbauteilstück 31 und das okklusale/zweite/obere Aufbauteilstück unterteilt. Fig. 5a zeigt die Explosionszeichnung des Dentalimplantats aus Fig. 5. Der Kontaktstift 21 des ersten/unteren Aufbauteilstücks erlaubt beim Kontakt mit der Formausnehmung 22 eine rotatorische Beweglichkeit von 360° um die Achse des ersten/unteren Aufbauteilstücks. Bei dem Fügevorgang der beiden Aufbauteilstücke 31 und 32 des zweigeteilten Aufbauteils 3 kommt es bei der Aufwendung einer Kraft, die die beiden Aufbauteilstücke verspannt zu einer Hemmung, vorzugsweise zu einer Selbsthemmung, welche eine Rotation der beiden Aufbauteilstücke untereinander nur mit erhöhtem Kraft-/Momentaufwand zulässt. Die elliptische und konische Formausnehmung 11 des Pfostenteils 2 ist so gestaltet, dass sie form- und/oder kraftschlüssig mit dem elliptischen und konischen Kontaktstift 12 des ersten/unteren Aufbauteilstücks 31 des Aufbauteils 3 verbunden bzw. montiert werden kann. Beim Verbinden/Fügen des Pfostenteils 2 mit dem Aufbauteil 3 über die mit oder ohne die Verbindungsschraube 5 kommt es zu einer Hemmung, vorzugsweise zu einer Selbsthemmung über die elliptisch gestalteten Konusflächen. Das Aufbauteil 3 ist nun gegen das Pfostenteil 2 rotationsgesichert. Über die elliptische Gestaltung wird eine Indizierung erreicht.

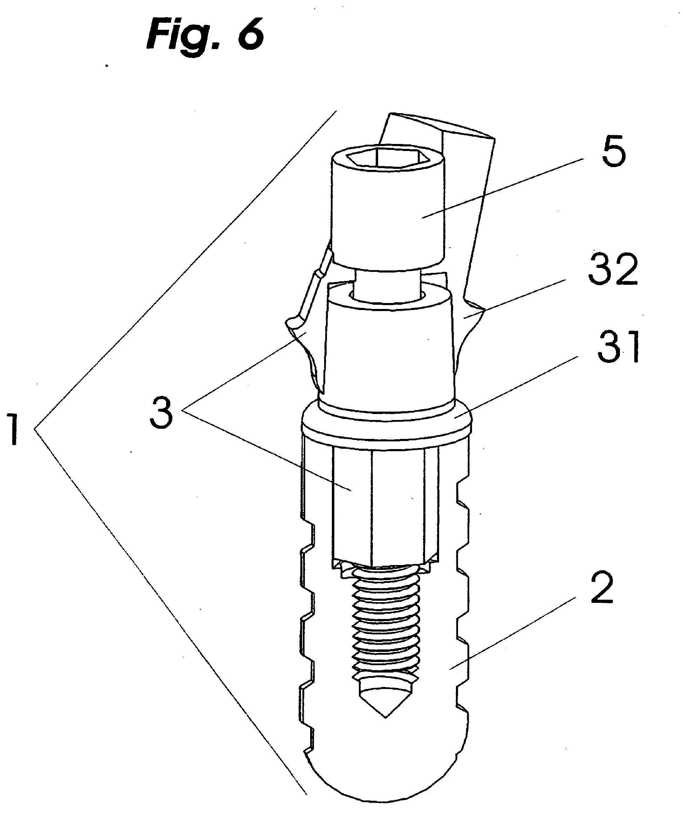

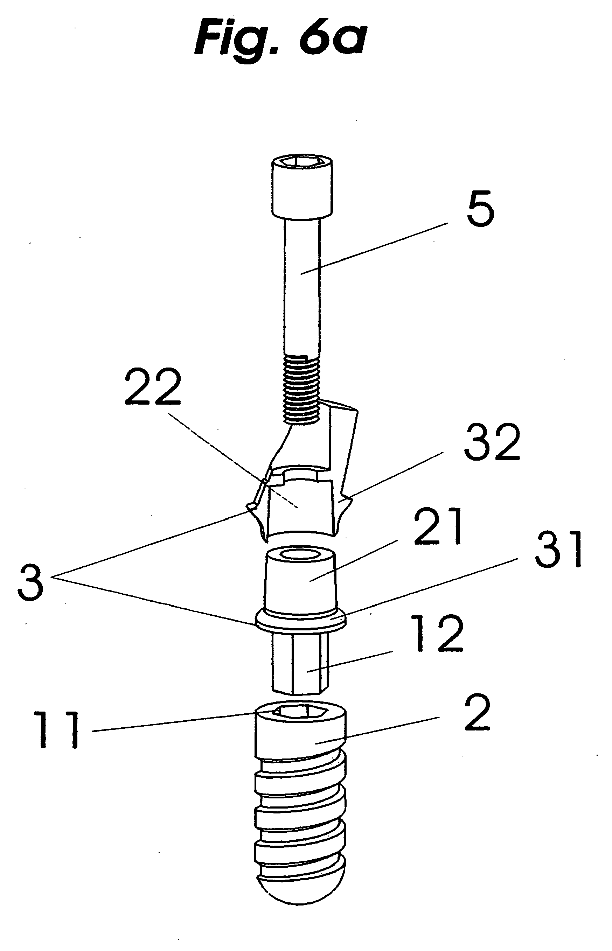

Ein weiteres Ausführungsbeispiel ist in Fig. 6 zu sehen. Das Dentalimplantat 1 besteht aus dem Pfostenteil 2, dem Aufbauteil 3 und der Verbindungsschraube 5. Das Aufbauteil 3 ist, in das erste/untere Aufbauteilstück 31 und das zweite/obere Aufbauteilstück 32 unterteilt. Bei dem Fügevorgang der beiden Aufbauteilstücke 31 und 32 des zweigeteilten Aufbaustals 3 kommt es bei der Aufwendung einer Kraft, die die beiden Aufbauteilstücke verspannt zu einer Hemmung, vorzugsweise zu einer Selbsthemmung, welche eine Rotation der beiden Aufbauteilstücke untereinander nur mit erhötem Kraft-/Momentaufwand zulässt. Fig. 6a zeigt die Explosionszeichnung des Dentalimplantats aus Fig. 6. Die sechskantförmige Formausnehmung 11 des Pfostenteils 2 ist so gestaltet, dass sie form- und/oder kraftschlüssig mit dem sechskantförmigen Kontaktstift 12 des ersten/unteren Aufbauteilstücks 31 des Aufbauteils 3 verbunden bzw. montiert werden kann und beide Aufbauteilstücke über das Gesperre des Sechskants gegeneinander rotationsgesichert sind.

Die Erfindung beruht darauf, dass ein Aufbauteil mit oder ohne Indizierung in Richtung des Pfostenteils in mindestens zwei Teile geteilt wird und die beiden oder mehrere Aufbauteile vor dem endgültigen Eingliedern im Patientenmund untereinander rotationsgesichert werden. Die Rotationssicherung kann auf einem Gipsmodell erfolgen.

Vorteilhafterweise erfolgt bei der mechanischen Teilung des Aufbauteils nur bei dem implantatseitigen Teil ein Kontakt zum Implantat. Das zweite Teil hat vorteilhafter weise keine mechanische Ankopplung und keinen Kontakt zum Implantat.

Das im Patientenmund montierte, sich im Einsatz befindliche, mehrgeteilte Aufbauteil ist an seiner internen Verbindung nicht zum wiederholten Herausnehmen ausgelegt. Es handelt sich bei keinem der mindestens zwei Teile des mehrgeteilten Aufbauteils nach dem Eingliedern im Patientenmund um ein herausnehmbares Element.

Die rotatorische Beweglichkeit der mehrgeteilten Aufbauteilstücke untereinander sollte größer 3°, vorteilhafterweise größer 6° und insbesondere größer 10° sein und oder mehr als 8 vorteilhafter Weise mehr als 12 und insbesondere mehr als 16 Positioniermöglichkeiten besitzen.

Die interne Verbindung der Teile des mehrgeteilten Aufbauteils können konisch, zylindrisch, stumpf, mit und ohne Anschlag und mit oder ohne selbsthemmende Wirkung gestaltet sein.

Im Folgenden sind mehrere Varianten der Ankopplung zwischen Implantat und Aufbauteil und der internen Verbindung zwischen dem mehrgeteilten, vorteilhafterweise zweigeteilten Aufbauteil beschrieben.

### Variante 1

Eine Variante der Rotationssicherung des mehrgeteilten Aufbauteils beruht auf einer Selbsthemmung, insbesondere einer konischen Selbsthemmung. Beim Fügen der beiden Aufbauteilstücke z.B. auf einem Gipsmodell kann der Zahntechniker oder der Behandler die rotatorische Position festlegen. Basierend auf der Haltekraft der Selbsthemmung, insbesondere der konischen Selbsthemmung, können alle weiteren Arbeiten vorgenommen werden, ohne dass eine Rotation zwischen den beiden Aufbauteilstücken auftritt.

Die Indizierung des basalen Aufbauteils in Richtung des Implantats kann eine beliebige geometrische Gestalt annehmen. Vorteilhaft sind die oben beschriebenen Möglichkeiten. Insbesondere eignet sich eine Variante mit einem nicht kreisförmigen Konus, zum Beispiel ein Oval oder eine Ellipse, welche somit eine Indizierung darstellen. Bei der Kombination einer basalen konischen Selbsthemmung und einer konischen Selbsthemmung Richtung okklusal des basalen Teils des mehrgeteilten Aufbauteils erweist es sich als vorteilhaft, bei der konischen Selbsthemmung in Richtung okklusal einen geringeren Konuswinkel zu wählen als bei der basalen konischen Selbsthemmung.

### Variante 2

Eine weitere Variante der Rotationssicherung zwischen den Aufbauteilstücken ist entweder die Matrize und oder die Patrize einer Indizierung spanabhebend zu fertigen. Dies kann in Kombination mit einer Selbsthemmung insbesondere einer konischen Selbsthemmung erfolgen.

Die Indizierung des basalen Aufbauteils in Richtung des Implantats kann eine beliebige geometrische Gestalt annehmen. Vorteilhaft sind die oben beschriebenen Möglichkeiten. Insbesondere eignet sich eine Variante mit einem nicht kreisförmigen Konus, zum Beispiel ein Oval oder eine Ellipse, welche somit eine Indizierung darstellen.

### Variante 3

Eine weitere Variante der Rotationssicherung zwischen den Aufbauteilstücken ist entweder die Matrize und oder die Patrize einer Indizierung formend zu fertigen. D.h. dass die Indizierung durch plastische Verformung eines, beider Aufbauteile oder eines Hilfsbauteils erfolgt.

Die Indizierung des basalen Aufbauteils in Richtung des Implantats kann eine beliebige geometrische Gestalt annehmen. Vorteilhaft sind die oben beschriebenen Möglichkeiten. Insbesondere eignet sich eine Variante mit einem nicht kreisförmigen Konus, zum Beispiel ein Oval oder eine Ellipse, welche somit eine Indizierung darstellen.

### Variante 4

Eine weitere Variante der Rotationssicherung zwischen den mehrgeteilten Aufbauteilen ist Verbinden durch Aufschmelzen eines oder beider Aufbauteile oder eines Hilfsmittels. Dies kann z. B. durch Löten oder Schweißen erfolgen.

Die Indizierung des basalen Aufbauteils in Richtung des Implantats kann eine beliebige geometrische Gestalt annehmen. Vorteilhaft sind die oben beschriebenen Möglichkeiten. Insbesondere eignet sich eine Variante mit einem nicht kreisförmigen Konus, zum Beispiel ein Oval oder eine Ellipse, welche somit eine Indizierung darstellen.

### Variante 5

Eine weitere Variante der Rotationssicherung zwischen den mehrgeteilten Aufbauteilen ist Verbinden durch Einbringen eines Zusatzstoffs, welcher nach dem Positionieren der

Aufbauteile und seinem Einbringen aushärtet und vorzugsweise eine Verbindung mit einem oder beiden Aufbauteilen eingeht.

Die Indizierung des basalen Aufbauteils in Richtung des Implantats kann eine beliebige geometrische Gestalt annehmen. Vorteilhaft sind die oben beschriebenen Möglichkeiten. Insbesondere eignet sich eine Variante mit einem nicht kreisförmigen Konus, zum Beispiel ein Oval oder eine Ellipse, welche somit eine Indizierung darstellen.

### Variante 6

Eine weitere Variante der Rotationssicherung zwischen den mehrgeteilten Aufbauteilen ist eine geometrische Indizierung mit mehr als acht Positioniermöglichkeiten (z.B. ein Vielzahnsystem) welches verschraubt wird.

Die Indizierung des basalen Aufbauteils in Richtung des Implantats kann eine beliebige geometrische Gestalt annehmen. Vorteilhaft sind die oben beschriebenen Möglichkeiten. Insbesondere eignet sich eine Variante mit einem nicht kreisförmigen Konus, zum Beispiel ein Oval oder eine Ellipse, welche somit eine Indizierung darstellen.

Weiterhin sind alle möglichen Kombinationen der oben aufgeführten Variationen denkbar.

## Patentansprüche

1. Dentalimplantat mit einem in einen Kieferknochen einbringbaren Pfostentell (2) und mit einem diesem zugeordneten Aufbauteil (3), an das ein Zahnersatzstück anbringbar ist, wobei das Aufbauteil mehrstückig, vorzugsweise zweistückig, ausgeführt
ist, und bei dem ein erstes Aufbauteilstück (31) mit einem angeformten ersten Kontaktstift (12) formschlüssig in eine zugeordnete Formausnehmung (11) im Pfostenteil und das erste Aufbauteilstück mit einem zweiten angeformten Kontaktstift (21) in eine zugeordnete Formausnehmung (22) eines zweiten Aufbauteilstücks (32) einbringbar ist, wobei der zweite angeformte Kontaktstift und die diesem zugeordnete Formausnehmung in ihren Querschnitten derart konturielt sind, dass der in die Formausnehmung eingebrachte zweite Kontaktstift relativ zur Formausnehmung um einen Verdrehwinkel von mindestens 3°, vorteilhafterweise um mindestens 6°, besonders vorteilhafterweise um mindestens 10°, verdrehbar ist, und wobei der an das erste Aufbauteilstück angeformte erste Kontaktstift und die diesem zugeordnete Formausnehmung im Pfostenteil jeweils konisch ausgeführt sind und einen elliptischen oder ovalen Querschnitt aufweisen.

2. Dentalimplantat nach Anspruch 1, bei dem auch die Formausnehmung im zweiten Aufbauteilstück konisch ausgeführt ist.

3. Dentalimplantat nach Anspruch 1 oder 2, bei dem das erste Aufbauteilstück nach Einbringung des zweiten Kontaktstiftes in die zugeordnete Formausnehmung des zweiten Aufbauteilstückes mit diesem verspannbar ist.

4. Dentalimplantat nach einem der Ansprüche 1 bis 3, bei dem die Aufbauteilstücke über eine gemeinsame Verbindungsschraube (5) an das Pfostenteil montierbar sind.

5. Dentalimplantat nach einem der Ansprüche 1 bis 4, bei dem im montierten Zustand ausschließlich der implantatseitige Teil des ersten Aufbauteilstücks in mechanischer Verbindung oder einem Kontakt zum Pfostenteil steht.

6. Dentalimplantat nach einem der Ansprüche 1 bis 5, dessen zweites Aufbauteilstück eine Positionsmarkierung zur Identifizierung einer vorgesehenen Orientierung relativ zum ersten Aufbauteilstück aufweist.

7. Dentalimplantat nach Anspruch 6, bei dem die Positionsmarkierung spanabhebend, formend, insbesondere plastisch formend, mittels eines Lasers oder basierend auf einer anderen formenden und/oder einer abtragenden und/oder auftragenden Technik angebracht ist.

8. Dentalimplantat nach einem der Ansprüche 1 bis 7, bei dem die über Kontaktstift und Formausnehmung hergestellte Verbindung der Aufbauteilstücke miteinander eine hemmende und/oder eine selbsthemmende, vorzugsweise eine konisch selbsthemmende, Wirkung aufweist.

9. Verfahren zur Montage eines Aufbauteils (3) eines Dentalimplantats nach einem der Ansprüche 1 bis 8, auβerhalb des Patientenmunds, bei dem der an das erste Aufbauteilstück (31) angeformte zweite Kontaktstift (21) die zugeordnete Formausnehmung (22) im zweiten Aufbauteilstück (32) eingebracht wird, die zwei Aufbauteilstücke (31, 32) zueinander ausgerichtet werden und das zweite mit dem ersten Aufbauteilstück fixiert wird.

## Claims

1. A dental implant having a post part (2) provided for being inserted into a jawbone and a mounting part (3) associated therewith, provided for fixing a dental prosthetic piece, wherein the mounting part is designed in multiple pieces, preferably in two pieces, and wherein a first mounting-part piece (31) is provided for being inserted, with a first molded-on contact pin (12), in a formlocking manner, into an associated form recess (11) formed into the post part, and the first mounting-part piece is provided for being inserted, with a second molded-on contact pin (21), into an associated form recess (22) of a second mounting-part piece (32), the cross-sections of the second molded-on contact pin and of the form recess associated therewith being contoured in such a way that the second contact pin inserted into the form recess can be rotated, relative to the form recess, by an angle of rotation of at least 3°, advantageously of at least 6°, particularly advantageously of at least 10°,
and the first contact pin molded onto the first mounting-part piece and the form recess associated therewith, formed into the post part each being of a conical design and having an elliptic or oval cross-section.

2. The dental implant of claim 1, wherein the form recess formed into the second mounting-part piece is also of a conical design.

3. The dental implant of claim 1 or 2, wherein the first mounting-part piece, after the second contact pin has been inserted into the form recess associated therewith of the second mounting-part piece, can be braced with said second contact pin.

4. The dental implant of any of claims 1 to 3, wherein the mounting-part pieces can be mounted to the post part by means of a common connection screw (5).

5. The dental implant of any of claims 1 to 4, wherein, in mounted condition, exclusively the implant-side part of the first mounting-part piece is in a mechanical connection or in contact with the post part.

6. The dental implant of any of claims 1 to 5, whose second mounting-part piece includes a position mark for identifying a predefined orientation relative to the first mounting-part piece.

7. The dental implant of claim 6, wherein the position mark is produced by material removal, by forming, in particular by plastic forming, by means of a laser, or based on another forming and/or material-removing and/or material-applying technique.

8. The dental implant of any of claims 1 to 7, wherein the connection of the mounting-part pieces with each other, established via the contact pin and the form recess, has a locking and/or self-locking, preferably a conically self-locking, effect.

9. A method for assembling a mounting part (3) of a dental implant according to any of claims 1 to 8 outside the patient's mouth, wherein the second contact pin (21) molded onto the first mounting-part piece (31) is inserted into the associated form recess (22) formed into the second mounting-part piece (32), the two mounting-part pieces (31, 32) are aligned to each other, and the second mounting-part piece is fixed with the first mounting-part piece.

## Revendications

1. Implant dentaire ayant un élément pilier (2) qui doit être introduit dans un os maxillaire et un élément de montage (3) y affecté, qui doit être fixé à une pièce de prothèse dentaire, dans lequel l'élément de montage est configuré en plusieurs pièces, de préférence en deux pièces, et dans lequel une première pièce d'élément de montage (31) peut être introduite, avec une première goupille de contact (12) solidarisée avec elle, à engagement positif, dans un creux façonné (11) y affecté, formé dans l'élément pilier, et la première pièce d'élément de montage peut être introduite, avec un deuxième goupille de contact (21) solidarisée avec elle, dans un creux façonné (22) y affecté d'une deuxième pièce d'élément de montage (32), les sections de la deuxième goupille de contact solidarisée et du creux façonné y affecté étant profilée de manière à ce que la deuxième goupille de contact introduite dans le creux façonné peut être tournée relativement au creux façonné par un angle de rotation d'au moins 3°, avantageusement d'au moins 6°, particulièrement avantageusement d'au moins 10°, et la première goupille de contact solidarisée avec la première pièce d'élément de montage et le creux façonné y affecté, formé dans élément pilier, étant chacun de configuration conique et ayant une section elliptique ou ovale.

2. Implant dentaire selon la revendication 1, dans lequel le creux façonné formé dans la deuxième pièce d'élément de montage est aussi de configuration conique.

3. Implant dentaire selon la revendication 1 ou 2, dans lequel la première pièce d'élément de montage, après que la deuxième goupille de contact a été introduite dans le creux façonné y affecté, de la deuxième pièce d'élément de montage, peut être serrée avec dite deuxième goupille de contact.

4. Implant dentaire selon l'une quelconque des revendications 1 à 3, dans lequel les pièces d'élément de montage peuvent être montées à l'élément pilier à l'aide d'une vis de connexion (5) commune.

5. Implant dentaire selon l'une quelconque des revendications 1 à 4, dans lequel, en étant monté, uniquement la partie du côté implant, de la première pièce d'élément de montage se trouve en connexion mécanique ou en contact avec l'élément pilier.

6. Implant dentaire selon l'une quelconque des revendications 1 à 5, dont la deuxième pièce d'élément de montage comprend un repère de position pour identifier une orientation prévue relativement à la première pièce d'élément de montage.

7. Implant dentaire selon la revendication 6, dans lequel le repère de position est produit par enlèvement de matériau, par façonnage, en particulier par façonnage plastique, à l'aide d'un laser, ou se basant sur une autre technique de façonnage et/ou d'enlèvement de matériau et/ou d'application de matériau.

8. Implant dentaire selon l'une quelconque des revendications 1 à 7, dans lequel la connexion des pièces d'élément de montage l'une avec l'autre, établie par la goupille de contact et le creux façonné, a un effet bloquant et/ou autobloquant, de préférence un effet autobloquant coniquement.

9. Procéde pour monter un élément de montage (3) d'un implant dentaire selon l'une quelconque des revendications 1 à 8 à l'extérieur de la bouche du patient, dans lequel la deuxième goupille de contact (21) solidarisée avec la première pièce d'élément de montage (31) est introduite dans le creux façonné (22) y affecté, formé dans la deuxième pièce d'élément de montage (32), les deux pièces d'élément de montage (31, 32) sont alignées l'une sur l'autre et la deuxième pièce d'élément de montage est fixé avec la première pièce d'élément de montage.
